# EUROPEAN PATENT SPECIFICATION

(11) **EP 3 091 292 B1**
(45) Date of publication and mention of the grant of the patent: **11.07.2018**
(21) Application number: 15166691.4
(22) Date of filing: 07.05.2015
(51) Int. Cl.: A47J 39/02, F24C 15/08, F24C 15/18

(54) **COOKING APPLIANCE FOR RECEIVING AT LEAST ONE COOKING VESSEL**
KOCHVORRICHTUNG ZUR AUFNAHME VON MINDESTENS EINEM KOCHGEFÄSS
APPAREIL DE CUISSON POUR RECEVOIR AU MOINS UN RÉCIPIENT DE CUISSON

(43) Date of publication of application: 09.11.2016
(73) Proprietor: Electrolux Appliances Aktiebolag, 105 45 Stockholm (SE)
(72) Inventor: HESSENAUER, Evi, 91541 Rothenburg o.d. Tauber (DE); KAISER, Kersten, 91541 Rothenburg o. d. Tauber (DE); HERZOG, Michael, 91541 Rothenburg ob der Tauber (DE); BURKHARDT, Jennifer, 91541 Rothenburg o. d. Tauber (DE); MICHALSKI, Alina, 89079 Ulm (DE)
(74) Representative: Electrolux Group Patents

(56) References cited:
- EP-A2- 0 273 323
- DE-A1- 4 406 108
- US-A- 2 182 682
- US-A- 2 217 804
- US-A- 2 527 566
- US-A- 2 695 947
- US-A- 3 085 142
- US-A- 3 525 299
- US-A- 4 147 924
- US-A- 4 287 818
- US-A- 4 569 277
- US-A- 5 097 759
- US-A1- 2011 277 644

## Description

The present invention relates to a cooking appliance according to the preamble of claim 1.

The basic parameter for controlling the cooking process is the temperature of food stuff and/or cookware. There are several methods for detecting the temperature. On a cooking hob with a glass ceramic panel a temperature sensor is arranged below the glass ceramic panel, on which a cooking vessel, for example a pot or pan, is placed. The temperature detected by said temperature sensor is used to control the cooking process for the food stuff in the cooking vessel. Another method is the detection of the temperature at the wall of the cooking vessel. In this case, a temperature sensor, e.g. a pyrometer, is remotely arranged outside the cooking vessel. Moreover, the temperature sensor may be integrated inside the bottom of the cooking vessel, wherein information about the temperature is wirelessly transferred to the cooking hob. A further kind of temperature sensor is directly in contact with food stuff or water inside the cooking vessel and wirelessly connected to the cooking hob. The knowledge of these temperatures may be used for programs or algorithms supporting the cooking process. Exact information about the temperature of the food stuff would be advantageous.

Further, there is a trend to use professional or semi-professional cooking appliances as well as professional cooking methods in domestic cuisines. For example, sous vide cooking methods increase in domestic cooking appliances.

At present, gastronorm containers are available for induction cooking. Said gastronorm containers are provided as cooking vessels and also for transporting cooked food stuff. The gastronorm containers have standardized sizes. For example, the gastronorm containers are used by the catering industry.

US 4,569,277 discloses a cooking apparatus provided for cooking pasta and other foods "to order". The cooking apparatus comprises a plurality of individual portion sized pots in a pot chamber. Each pot includes a cooking fluid admitting opening in the bottom thereof which receives a cooking fluid nozzle therein. Cooking and draining are performed without moving the nozzle or the pot. The drained cooking fluid is collected in the pot chamber and recirculated by means of a filter and pump, so that said cooking fluid may be used for the same or other pots. Temperature sensors are arranged in a sump of the pot chamber.

US 5,097,759 discloses a sous vide reheating device including at least two water heating chambers. Each chamber has a heating device and a thermostat for controlling the temperature of the water in the chamber. Each chamber may be divided into a plurality of sub-chambers, wherein each sub-chamber has an associated timer in order to measure the amount of time elapsed for that sub-chamber.

US 2,695,947 discloses a deep fat frying attachment for electric ranges. The attachment comprises a basin with a heating element in the bottom of said basin. A cooking vessel is removably received by the basin, wherein the sidewalls of the cooking vessel are completely enclosed by the basin.

US 4,287,818 discloses a frying apparatus including a fry pot and a frying rack. Heating elements are arranged in the lower portion of the fry pot. The frying rack is removably arranged in the upper portion of the fry pot. The frying rack is insertable into the fry pot by a rack support assembly.

US 2,182,682 discloses a food warming table. A top plate includes a number of apertures through which receptacles are inserted. Said receptacles are provided for containing food. The receptacles have rectangular or circular cross-sections. The cross-sections of the apertures are adapted to the cross-sections of the receptacles.

US 2011/0277644 A1 discloses a service station including a number of basins. Said basins are configured for receiving food pans of different shapes and different sizes. Further, the service station includes an active cooling system and an active heating system. The food pans are completely counter-sunk in the basins.

It is an object of the present invention to provide a cooking appliance, which allows an improved temperature controlled cooking process, wherein the energy is efficiently used.

The object is achieved by the cooking appliance according to claim 1.

According to the present invention the basin is provided for receiving a combination of standardized cooking vessels, wherein the size of each standardized cooking vessel is an integer multiple of a base unit area, and wherein the size of one heating element or of some adjacent heating elements correspond with the base unit area for the standardized cooking vessels, and wherein each standardized cooking vessel is separately heated by one or more heating elements, and wherein the cooking surface is made of glass ceramics.

The inventive cooking appliance allows that the cooking vessels are counter-sunk on the cooking surface made of glass ceramics. The area of contact between the cooking surface and the cooking vessel is relative large. This improves the heat transfer from the cooking surface to the cooking vessel on the one hand and increases the accuracy of the temperature detection by the temperature sensor on the other hand. It is possible to heat one big cooking vessel or more cooking vessels by different temperatures and/or powers.

In particular, the at least one heating element is an electric heating element, for example an induction heating element and/or a radiant heating element.

In particular, the bottom of the basin is flat. The flat bottom improves the thermal contact between the cooking surface and the cooking vessel. The cooking surface is made of glass ceramics. The glass ceramic cooking surface is well appropriate for the induction heating element or radiant heating element.

For example, the temperature sensor corresponds with one or more adjacent heating elements.

Further, at least one temperature sensor may correspond with one cooking vessel.

Preferably, the depth of the basin is between 1 mm and 25 mm. A small depth of the basin forms a frame for the cooking vessel. A large depth of the basin allows that the complete cooking vessel or at least a relative big lower portion of said cooking vessel is received by the basin.

Further, the cooking appliance may comprise at least one scale arranged in the basin, wherein said scale is provided for weighting the cooking vessel. The scale in the basin allows weight adjusted cooking.

Moreover, the cooking appliance may comprise or correspond with a user interface. Preferably, said user interface is arranged at the same level as the top side of the cooking surface.

In particular, those portions of the basin provided for being in contact with one or more cooking vessels are thermally insulated from the environment. This contributes to efficient use of energy.

Further, a cooking hob may be arranged on the horizontal top side of the cooking surface. Preferably, said cooking hob is arranged besides the at least one basin. In particular, the cooking hob comprises standard cooking areas.

For example, the cooking appliance is installable in a work top, wherein preferably the top side of the cooking surface is arranged or arrangeable at the same level as said work top.

Alternatively, the cooking appliance may be a freestanding cooking device.

Novel and inventive features of the present invention are set forth in the appended claims.

The present invention will be described in further detail with reference to the drawing, in which
- FIG 1: illustrates a schematic perspective view of a cooking appliance according to a preferred embodiment of the present invention,
- FIG 2: illustrates a schematic perspective view of the cooking appliance according to the preferred embodiment of the present invention with one cooking vessel,
- FIG 3: illustrates a schematic top view of the cooking appliance according to the preferred embodiment of the present invention with said one two cooking vessel,
- FIG 4: illustrates a schematic top view of the cooking appliance according to the preferred embodiment of the present invention with two cooking vessels, and
- FIG 5: illustrates a schematic top view of the cooking appliance according to the preferred embodiment of the present invention with four cooking vessels.

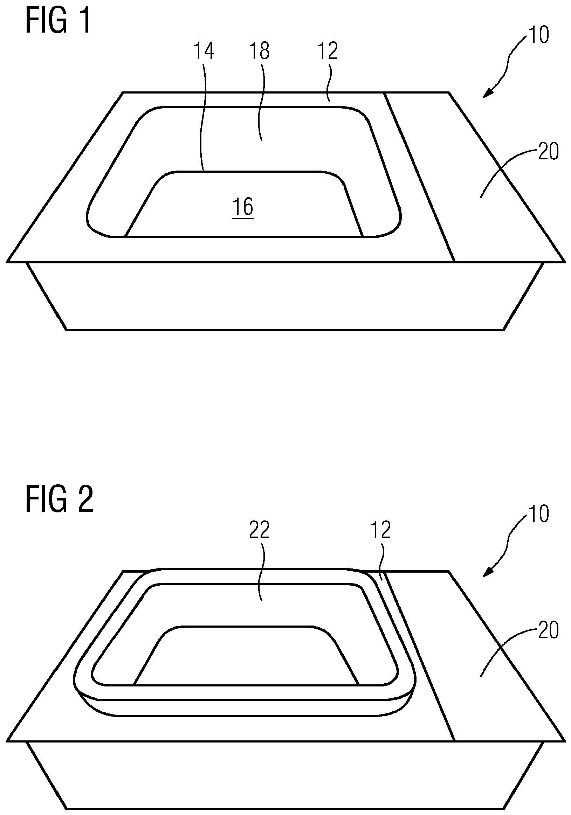

FIG 1 illustrates a schematic perspective view of a cooking appliance 10 according to a preferred embodiment of the present invention. The cooking appliance 10 is a cooking hob or a part of a cooking hob. Further, the cooking appliance 10 may be a freestanding autonomous appliance or an integrated part of a built-in kitchen.

The cooking appliance 10 comprises a cooking surface and a user interface 20. The cooking surface and the user interface 20 are arranged side-by-side. For example, the material of the cooking surface may be glass ceramic, aluminium, stainless steel or enamel. The cooking surface includes a top side 12 and a basin 14. The top side 12 of the cooking surface extends horizontally.

In this example, the top side 12 of the cooking surface is arranged at the same level as the user interface 20. Preferably, the top side 12 of the cooking surface and the user interface 20 are arranged at the same level as a worktop. The basin 14 of the cooking surface extends downwards from the level of the top side 12. In this example, the basin 14 is arranged in the central portion of the cooking surface. The basin 14 includes a bottom 16 and a side wall 18. The top side 12 of the cooking surface encloses an upper edge of the side wall 18 of the basin 14. The bottom 16 of the basin 14 extends horizontally. Preferably, the bottom 16 of the basin 14 is flat. The side wall 18 of the basin 14 encloses the bottom 16 of said basin 14. The side wall 18 of the basin 14 extends vertically or is marginally inclined. In the latter case, the diameter in horizontal direction of the basin 14 decreases top down. The basin 14 is arranged below the top side 12 of the cooking surface.

The basin 14 forms a cooking zone and is provided for receiving a cooking vessel 22. Preferably, the size of the basin 14 is adapted to the size of a defined cooking vessel 22. The cooking appliance 10 comprises at least one heating element. For example, said heating element may be an induction heating element or a radiant heating element. Preferably, the at least one heating element is arranged below and/or inside the bottom 16 of the basin 14. Optionally, one or more additional heating elements may be arranged outside the sidewall 18 of the basin 14.

Further, the cooking appliance 10 comprises at least one temperature sensor. Preferably, said at least one temperature sensor is arranged below and/or besides the cooking vessel 22, when the cooking vessel 22 is received by the basin 14. The heating element and the temperature sensor are not shown in the drawings. In particular, the temperature sensor is a part of the heating element. Preferably, the temperature sensor is arranged in a central portion of the heating element. According to a first example, the temperature sensor is arranged below the cooking surface, e.g. glass ceramic panel, and in the centre of the heating element. In this example, there is no contact between the temperature sensor and the cooking vessel. According to a second example, the temperature sensor is arranged in the centre of the heating element, wherein a hole is formed in the cooking surface, e.g. glass ceramic panel, in which the temperature sensor is placed. In this example, there is a direct contact between the temperature sensor and the bottom of the cooking vessel. In the second example the distance between the temperature sensor and the bottom of the cooking vessel is smaller than as in the first example.

The basin 14 has a depth between 1 mm and about 20 mm. With a small depth the basin 14 forms a kind of frame for the cooking vessel 22. With a large depth of the basin 14, the complete cooking vessel 22 or at least a relative big lower portion of said cooking vessel 22 is received by the basin 14.

FIG 2 illustrates a schematic perspective view of the cooking appliance 10 according to the preferred embodiment of the present invention with the cooking vessel 22. In FIG 2 the cooking vessel 22 is received by the basin 14. The bigger lower portion of the cooking vessel 22 is sunk-in the basin 14.

In this example, the cooking vessel 22 is a gastronorm container having a standardized size. The gastronorm containers are provided as cooking vessels. Further, the gastronorm containers are provided for transporting cooked food stuff.

The size of the basin 14 is marginally bigger than the size of the counter-sunk portion of the cooking vessel 22. Thus, there is a perfect fit between the cooking vessel 22 and the basin 14.

Optionally, an additional frame or holder may be provided in order to fix the position of the cooking vessel 22 in relation to the basin 14. Furthermore, the geometric structure of the at least one heating element may be adapted to the base area of the cooking vessel 22.

In this example, the base areas of the basin 14 and the cooking vessel 22 are rectangular with rounded corners. According to other examples, the base areas of the basin 14 and/or the cooking vessel 22 may be circular, oval, square or rectangular. In a similar way, the at least one heating element may be circular, oval, square or rectangular.

Further, the cooking appliance 10 may comprise at least one illumination device. Said illumination device may provide a direct and/or indirect illumination of the top side 12 and/or the basin 14. The illumination device may be an integrated part of the cooking appliance 10, the basin 14 and/or the cooking zone.

Additionally, the cooking appliance 10 may comprise a scale integrated in the basin 14, so that the food stuff in the cooking vessel 22 in the basin 14 can be weighted. For example, the scale allows weight adjusted cooking.

Moreover, the cooking appliance 10 may comprise a basket lifting system. Said basket lifting system is provided for putting a basket with food stuff into the cooking vessel 22 and/or for removing the basket with food stuff from the cooking vessel 22. For example, the basket lifting system is controlled by a preset timer. In a similar way, the cooking appliance 10 may comprise a lifting system provided for lifting the food stuff and/or the cooking vessel 22 into and/or out of the basin 14.

For example, there is a direct contact between the basin 14 and the cooking vessel 22. Preferably, those portions of the basin 14 enclosing the cooking vessel 22 with direct contact are thermally insulated. In general, the basin 14 may be thermally insulated in order to obtain an efficient energy usage.

Furthermore, the cooking appliance 10 may comprise a cover sheet for closing the basin 14. For example, said cover sheet and the top side 12 of the cooking surface form a continuous area at the same level in the closed state of the basin 14.

Preferably, the cooking appliance 10 is provided for performing all kinds of cooking processes, which are possible on a cooking hob. For example, the cooking appliance 10 allows a low temperature cooking at about 85 °C for preparing milk, pudding, sausages, rice and they like. Further, the cooking appliance 10 may allow medium temperature cooking at between 90 °C and 95 °C for preparing dumplings, fish, poaching, bouillon, eggs and they like. Moreover, the cooking appliance 10 may allow high temperature cooking at about 98 °C for boiling vegetables, potatoes, eggs and they like. Additionally, the cooking appliance 10 may allow strong temperature cooking at about 98 °C for fierce boiling pasta and they like.

Furthermore, the cooking appliance 10 may allow steam cooking, keeping warm functions, reheating of food stuff, sous vide cooking, deep frying, frying, fondues functions, smoking functions and popcorn programs. Preferably, sous vide cooking may be performed in the complete temperature range between 40 °C and 80 °C. Warming functions and cooling functions with a warming plate or cooling plate, respectively, may also be performed by the cooking appliance 10. A time control may also be provided by the cooking appliance 10. For example, the user may request boiling water for a certain time point.

The gastronorm containers are available on the market in different versions in view of the size, material and coating. The gastronorm containers have standardized sizes. In this example, the basin 14 of the cooking appliance 10 is provided for one gastronorm container 2/3 GN, two gastronorm containers 1/3 GN or four gastronorm containers 1/6 GN. The gastronorm container 2/3 GN has a length of 354 mm and a width of 325 mm. The gastronorm container 1/3 GN has a length of 176 mm and a width of 325 mm. The gastronorm container 1/6 GN has a length of 176 mm and a width of 162 mm. In FIG 2 the cooking vessel 22 is the gastronorm container 2/3 GN. The gastronorm containers allow flexibility in cooking.

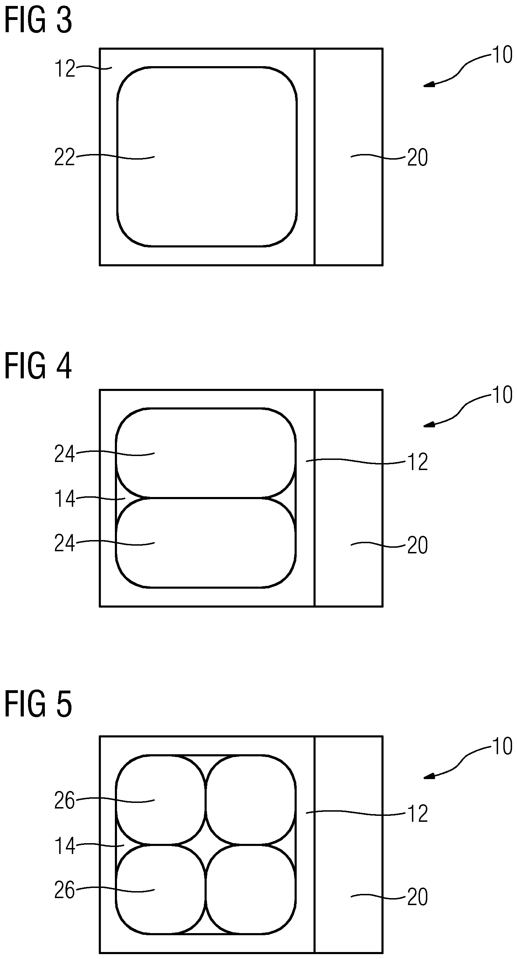

FIG 3 illustrates a schematic top view of the cooking appliance 10 according to the preferred embodiment of the present invention with one cooking vessel 22. The cooking vessel 22 is the gastronorm container 2/3 GN and has the length of 354 mm and the width of 325 mm. In this example, the basin 14 is exactly adapted for receiving the one gastronorm container 2/3 GN.

FIG 4 illustrates a schematic top view of the cooking appliance 10 according to the preferred embodiment of the present invention with two cooking vessels 24. The both cooking vessels 24 are the gastronorm containers 1/3 GN having the length of 176 mm and the width of 325 mm.

Several heating elements may be arranged side-by-side below and/or inside the bottom 16 of the basin 14. In particular, the sizes of said heating elements are adapted to the size of the cooking vessels 24, wherein one or more heating elements correspond with one cooking vessel 24. Preferably, the heating elements are activated separately, so that also only one of the two cooking vessels 24 is heated.

FIG 5 illustrates a schematic top view of the cooking appliance 10 according to the preferred embodiment of the present invention with four cooking vessels 26. The four cooking vessels 26 are the gastronorm containers 1/6 GN having the length of 176 mm and the width of 162 mm.

Also in this embodiment, several heating elements may be arranged side-by-side below and/or inside the bottom 16 of the basin 14. The sizes of said heating elements may be adapted to the size of the cooking vessels 26, wherein one or more heating elements correspond with one cooking vessel 26. The heating elements may be activated separately, so that also only one, two or three of the four cooking vessels 26 are heated.

According to a preferred embodiment of the present invention, the sizes and positions of the heating elements below and/or inside the bottom 16 of the basin 14 are adapted in such a way that all possible standardized cooking vessels 22, 24 and 26 may be heated separately. For example, the sizes and positions of the heating elements are adapted to the smallest possible standardized cooking vessel 26, wherein the sizes of the bigger standardized cooking vessels 22 and 24 are an integer multiple of the size of said smallest possible standardized cooking vessel 26. More general, the size of the heating elements corresponds with a base unit area, wherein the size of each possible standardized cooking vessel 22, 24 and 26 is an integer multiple of the size of said base unit area.

As shown in FIG 3 to FIG 5, the basin 14 may receive different combinations of cooking vessels 22, 24 and 26. Further, the cooking vessels 22, 24 and 26 may be covered by different lids, wherein said lids are adapted to different cooking functions, e.g. standard cooking or steam cooking with a gasket.

Additionally, the cooking appliance 10 may comprise further accessories for special cooking processes, e.g. sous vide cooking, pasta cooking, steam cooking, pressure cooking or deep frying. Said accessories may be special baskets, racks and/or containers. For example, a pasta basket, a deep frying basket or a sous-vide rack may be provided. Further accessories may be an induction driven hotplate for warming up and/or a cooling plate for cooling down cooked food stuff before putting inside the fridge.

At last, the cooking appliance 10 may comprise one or more cover elements or lids in order to obtain a special design.

In particular, the cooking appliance is provided for assisted cooking. The cooking appliance allows all cooking methods, e.g. boiling, frying, deep frying, steaming and poaching. The accessories of the cooking appliance facilitate the assisted cooking as well as the standard cooking.

### List of reference numerals

- 10: cooking appliance
- 12: top side of the cooking surface
- 14: basin
- 16: bottom
- 18: side wall
- 20: user interface
- 22: cooking vessel, gastronorm container 2/3 GN
- 24: cooking vessel, gastronorm container 1/3 GN
- 26: cooking vessel, gastronorm container 1/6 GN

## Claims

1. A cooking appliance (10) comprising at least one cooking surface (12, 14), wherein
- the cooking surface includes a horizontal top side (12) and at least one basin (14) extending downwards from said top side (12),
- the basin (14) is provided for receiving at least one cooking vessel (22, 24, 26), so that the cooking vessel (22, 24, 26) is at least partially enclosed by the basin (16),
- the basin (14) includes a horizontal bottom (16) and a side wall (18) enclosing said bottom (16),
- the top side (12) of the cooking surface encloses an upper edge of the side wall (18) of the basin (14),
- at least one heating element is arranged below or inside the bottom (16) of the basin (14), and
- at least one temperature sensor is arranged inside or below the basin (14), so that
- the temperature sensor is in a direct or indirect thermal contact with a corresponding cooking vessel (22, 24, 26),
**characterized in that**
the basin (14) is provided for receiving a combination of standardized cooking vessels (22, 24, 26), wherein the size of each standardized cooking vessel (22, 24, 26) is an integer multiple of a base unit area, and wherein the size of one heating element or of some adjacent heating elements corresponds with the base unit area for the standardized cooking vessels (22, 24, 26), and wherein each standardized cooking vessel (22, 24, 26) is separately heated by one or more heating elements, and wherein the cooking surface (12, 14) is made of glass ceramics.

2. The cooking appliance (10) according to claim 1,
**characterized in that**
the at least one heating element is an electric heating element, either an induction heating element or a radiant heating element.

3. The cooking appliance (10) according to any one of the preceding claims,
**characterized in that**
the bottom (16) of the basin (14) is flat.

4. The cooking appliance (10) according to any one of the preceding claims,
**characterized in that**
the temperature sensor corresponds with one or more adjacent heating elements.

5. The cooking appliance (10) according to any one of the preceding claims,
**characterized in that**
at least one temperature sensor corresponds with one cooking vessel (22, 24, 26).

6. The cooking appliance (10) according to any one of the preceding claims,
**characterized in that**
the depth of the basin (14) is between 1 mm and 25 mm.

7. The cooking appliance (10) according to any one of the preceding claims,
**characterized in that**
the cooking appliance (10) comprises at least one scale arranged in the basin (14), wherein said scale is provided for weighting the cooking vessel (22, 24, 26).

8. The cooking appliance (10) according to any one of the preceding claims,
**characterized in that**
the cooking appliance (10) comprises or corresponds with a user interface (20), wherein said user interface (20) is arranged at the same level as the top side (12) of the cooking surface.

9. The cooking appliance (10) according to any one of the preceding claims,
**characterized in that**
those portions of the basin (14) provided for being in contact with one or more cooking vessels (22, 24, 26) are thermally insulated from the environment.

10. The cooking appliance (10) according to any one of the preceding claims,
**characterized in that**
a cooking hob is arranged on the horizontal top side (12) of the cooking surface.

11. The cooking appliance (10) according to claim 10,
**characterized in that**
the cooking hob is arranged besides the at least one basin (14) .

12. The cooking appliance (10) according to any one of the preceding claims,
**characterized in that**
the cooking appliance (10) is installable in a work top.

13. The cooking appliance (10) according to claim 12,
**characterized in that**
the top side (12) of the cooking surface is arranged or arrangeable at the same level as the work top.

14. The cooking appliance (10) according to any one of the claims 1 to 12,
**characterized in that**
the cooking appliance (10) is a freestanding cooking device.

## Patentansprüche

1. Kochvorrichtung (10), die mindestens eine Kochfläche (12, 14) aufweist, wobei
- die Kochfläche eine horizontale Oberseite (12) und mindestens ein Becken (14) aufweist, das sich von der Oberseite (12) nach unten erstreckt,
- das Becken (14) zum Aufnehmen von mindestens einem Kochgefäß (22, 24, 26) bereitgestellt ist, sodass das Kochgefäß (22, 24, 26) mindestens teilweise von dem Becken (16) umgeben ist,
- das Becken (14) einen horizontalen Boden (16) und eine Seitenwand (18), die den Boden (16) umgibt, aufweist,
- die Oberseite (12) der Kochfläche eine Oberkante der Seitenwand (18) des Beckens (14) umgibt,
- mindestens ein Heizelement unter oder in dem Boden (16) des Beckens (14) angeordnet ist, und
- mindestens ein Temperaturfühler in oder unter dem Becken (14) angeordnet ist, sodass
- der Temperaturfühler in direktem oder indirektem Thermokontakt mit dem entsprechenden Kochgefäß (22, 24, 26) steht,
**dadurch gekennzeichnet, dass**
das Becken (14) zum Aufnehmen einer Kombination standardisierter Kochgefäße (22, 24, 26) bereitgestellt ist, wobei die Größe von jedem standardisierten Kochgefäß (22, 24, 26) ein ganzzahliges Vielfaches einer Basisflächeneinheit ist, und wobei die Größe von einem Heizelement oder von einigen benachbarten Heizelementen der Basisflächeneinheit für die standardisierten Kochgefäße (22, 24, 26) entspricht, und wobei jedes standardisierte Kochgefäß (22, 24, 26) durch ein oder mehrere Heizelemente separat erhitzt wird, und wobei die Kochfläche (12, 14) aus Glaskeramik hergestellt ist.

2. Kochvorrichtung (10) nach Anspruch 1,
**dadurch gekennzeichnet, dass**
das mindestens eine Heizelement ein elektrisches Heizelement ist, wobei es entweder ein Induktionsheizelement oder ein Strahlungsheizelement ist.

3. Kochvorrichtung (10) nach einem der vorhergehenden Ansprüche,
**dadurch gekennzeichnet, dass**
der Boden (16) des Beckens (14) flach ist.

4. Kochvorrichtung (10) nach einem der vorhergehenden Ansprüche,
**dadurch gekennzeichnet, dass**
der Temperaturfühler einem oder mehreren der benachbarten Heizelemente entspricht.

5. Kochvorrichtung (10) nach einem der vorhergehenden Ansprüche,
**dadurch gekennzeichnet, dass**
mindestens ein Temperaturfühler einem Kochgefäß (22, 24, 26) entspricht.

6. Kochvorrichtung (10) nach einem der vorhergehenden Ansprüche,
**dadurch gekennzeichnet, dass**
die Tiefe des Beckens (14) zwischen 1 mm und 25 mm beträgt.

7. Kochvorrichtung (10) nach einem der vorhergehenden Ansprüche,
**dadurch gekennzeichnet, dass**
die Kochvorrichtung (10) mindestens eine Waage aufweist, die in dem Becken (14) angeordnet ist, wobei die Waage zum Wiegen des Kochgefäßes (22, 24, 26) bereitgestellt ist.

8. Kochvorrichtung (10) nach einem der vorhergehenden Ansprüche,
**dadurch gekennzeichnet, dass**
die Kochvorrichtung (10) eine Bedienoberfläche (20) aufweist oder mit dieser korrespondiert, wobei die Bedienoberfläche (20) auf der gleichen Höhe wie die Oberseite (12) der Kochfläche angeordnet ist.

9. Kochvorrichtung (10) nach einem der vorhergehenden Ansprüche,
**dadurch gekennzeichnet, dass**
die Abschnitte des Beckens (14), die bereitgestellt sind, um mit einem oder mehreren Kochgefäßen (22, 24, 26) in Kontakt zu stehen, thermisch von der Umgebung isoliert sind.

10. Kochvorrichtung (10) nach einem der vorhergehenden Ansprüche,
**dadurch gekennzeichnet, dass**
auf der horizontalen Oberseite (12) der Kochfläche ein Kochfeld angeordnet ist.

11. Kochvorrichtung (10) nach Anspruch 10,
**dadurch gekennzeichnet, dass**
das Kochfeld neben dem mindestens einen Becken (14) angeordnet ist.

12. Kochvorrichtung (10) nach einem der vorhergehenden Ansprüche,
**dadurch gekennzeichnet, dass**
die Kochvorrichtung (10) in eine Arbeitsplatte eingebaut werden kann.

13. Kochvorrichtung (10) nach Anspruch 12,
**dadurch gekennzeichnet, dass**
die Oberseite (12) der Kochfläche auf der gleichen Höhe wie die Arbeitsplatte angeordnet ist oder angeordnet werden kann.

14. Kochvorrichtung (10) nach einem der Ansprüche 1 bis 12,
**dadurch gekennzeichnet, dass**
die Kochvorrichtung (10) ein freistehendes Kochgerät ist.

## Revendications

1. Appareil de cuisson (10) comprenant au moins une surface de cuisson (12, 14),
- la surface de cuisson comportant un côté supérieur horizontal (12) et au moins un bac (14) s'étendant vers le bas depuis ledit côté supérieur (12),
- le bac (14) étant prévu pour recevoir au moins un récipient de cuisson (22, 24, 26), de telle sorte que le récipient de cuisson (22, 24, 26) soit au moins en partie enfermé par le bac (16),
- le bac (14) comportant un fond horizontal (16) et une paroi latérale (18) enfermant ledit fond (16),
- le côté supérieur (12) de la surface de cuisson enfermant un bord supérieur de la paroi latérale (18) du bac (14),
- au moins un élément chauffant étant disposé en dessous ou à l'intérieur du fond (16) du bac (14), et
- au moins un capteur de température étant disposé à l'intérieur ou en dessous du bac (14), de telle sorte que
- le capteur de température soit en contact thermique direct ou indirect avec un récipient de cuisson correspondant (22, 24, 26),
**caractérisé en ce que**
le bac (14) est prévu pour recevoir une combinaison de récipients de cuisson standardisés (22, 24, 26), la taille de chaque récipient de cuisson standardisé (22, 24, 26) étant un multiple entier d'une surface unitaire de base, et la taille d'un élément chauffant ou de certains éléments chauffants adjacents correspondant à la surface unitaire de base pour les récipients de cuisson standardisés (22, 24, 26), et chaque récipient de cuisson standardisé (22, 24, 26) étant chauffé séparément par un ou plusieurs éléments chauffants, et la surface de cuisson (12, 14) étant fabriquée en vitrocéramique.

2. Appareil de cuisson (10) selon la revendication 1,
**caractérisé en ce que**
l'au moins un élément chauffant est un élément chauffant électrique, soit un élément chauffant à induction soit un élément chauffant à chaleur rayonnante.

3. Appareil de cuisson (10) selon l'une quelconque des revendications précédentes,
**caractérisé en ce que**
le fond (16) du bac (14) est plat.

4. Appareil de cuisson (10) selon l'une quelconque des revendications précédentes,
**caractérisé en ce que**
le capteur de température correspond à un ou plusieurs éléments chauffants adjacents.

5. Appareil de cuisson (10) selon l'une quelconque des revendications précédentes,
**caractérisé en ce**
**qu'**au moins un capteur de température correspond à un récipient de cuisson (22, 24, 26).

6. Appareil de cuisson (10) selon l'une quelconque des revendications précédentes,
**caractérisé en ce que**
la profondeur du bac (14) est comprise entre 1 mm et 25 mm.

7. Appareil de cuisson (10) selon l'une quelconque des revendications précédentes,
**caractérisé en ce que**
l'appareil de cuisson (10) comprend au moins une balance disposée dans le bac (14), ladite balance étant prévue pour peser le récipient de cuisson (22, 24, 26).

8. Appareil de cuisson (10) selon l'une quelconque des revendications précédentes,
**caractérisé en ce que**
l'appareil de cuisson (10) comprend ou correspond à une interface utilisateur (20), ladite interface utilisateur (20) étant disposée au même niveau que le côté supérieur (12) de la surface de cuisson.

9. Appareil de cuisson (10) selon l'une quelconque des revendications précédentes,
**caractérisé en ce que**
ces parties du bac (14) prévues pour être en contact avec un ou plusieurs récipients de cuisson (22, 24, 26) sont isolées thermiquement de l'environnement.

10. Appareil de cuisson (10) selon l'une quelconque des revendications précédentes,
**caractérisé en ce**
**qu'**une plaque de cuisson est disposée sur le côté supérieur horizontal (12) de la surface de cuisson.

11. Appareil de cuisson (10) selon la revendication 10,
**caractérisé en ce que**
la plaque de cuisson est disposée à côté de l'au moins un bac (14).

12. Appareil de cuisson (10) selon l'une quelconque des revendications précédentes,
**caractérisé en ce que**
l'appareil de cuisson (10) peut être installé dans un plan de travail.

13. Appareil de cuisson (10) selon la revendication 12,
**caractérisé en ce que**
le côté supérieur (12) de la surface de cuisson est disposé ou peut être disposé au même niveau que le plan de travail.

14. Appareil de cuisson (10) selon l'une quelconque des revendications 1 à 12,
**caractérisé en ce que**
l'appareil de cuisson (10) est un dispositif de cuisson autoportant.
